# EUROPEAN PATENT SPECIFICATION

(11) **EP 0 557 568 B1**
(45) Date of publication and mention of the grant of the patent: **14.05.1997**
(21) Application number: 92104003.6
(22) Date of filing: 09.03.1992
(51) Int. Cl.: C05C 9/00, C05C 1/00, C05G 3/00

(54) **Fertilizer composition comprising dispersions or solutions of nutrient compounds and method for its manufacture**
Nährstoffdispersionen oder -lösungen enthaltende Düngemittel-Zusammensetzung und Verfahren zu deren Herstellung
Compositions fertilisante contenant des dispersions ou des solutions de composés nutritifs et procédé pour sa préparation

(30) Priority: 28.02.1992 NO 920788
(43) Date of publication of application: 01.09.1993
(73) Proprietor: NORSK HYDRO A/S, 0240 Oslo 2 (NO)
(72) Inventor: Carlsen, Arne, N-3700 Skien (NO); Nygaard, Erik Christopher, N-3900 Porsgrunn (NO); Syrstad, Erik, N-1360 Nesbru (NO); Consoli, Tom, Lafayette, CA 94549 (NO)
(74) Representative: Böhm, Brigitte, Dipl.-Chem. Dr.

(56) References cited:
- WO-A-93/01150
- FR-A- 2 086 482
- US-A- 3 272 613
- US-A- 4 394 149

## Description

The present invention relates to fertilizer compositions comprising dispersions or solutions of nutrient compounds, the most interesting type of such compositions being slow release fertilizers.

The invention further relates to manufacture of such fertilizers.

One problem related to application of mineral fertilizers is the risk of losing nutrient salts into the ground water, rivers and lakes. Application of too much fertilizer or heavy rain during or just after application of the fertilizer will increase the risk of such pollution of the water reservoir. One way of protecting granulated or prilled fertilizer against too rapid release into the ground and also the water reservoirs is to coat the fertilizer particles by special chemicals such that the nutrient is released over a certain period of time. However, most of the coatings used today are not very suitable for this purpose and the effect attained is only of limited value.

In several countries application of aqueous solutions of nutrients is an extensively used form of mineral fertilizer. Several of these systems are to a greater extent than prilled or granulated fertilizer subject to loss of nutrients due to uncontrolled release into the water reservoirs. It is known in the art that such undesired release may be reduced by addition of various types of gel-forming compounds like guar gum derivatives.

In an aqueous environment these will form hydrates and form molecular net works in the aqueous solution and thereby reduce the release of nutrients to some extent. However, tests performed have shown that the application of gelling agents will only to a small degree be able to reduce the release of nutrients from aqueous solutions of mineral fertilizers.

In US Patent No. 4,880,455 there is described a slow release fertilizer coated with a water-insoluble polymer of prepolymerized crosslinked unsaturated oil. The fertilizer particles are preferably coated with two layers of coatings. Thus coated fertilizer particles are stated to be strong and release the fertilizer over prolonged periods of time. However, such coatings are expensive, especially when applied in two layers. A further disadvantage related to such coatings is that if only a tiny hole is formed in the coating the nutrient will rapidly leach out and the effect of the coating is virtually non-existent with regard to slow release. To prevent the well known risk of penetration of the coating, several layers of coatings are applied, but this increases the overall cost of the fertilizer.

Aqueous fertilizer slurries which can be pumped and sprayed are known from the patent description RD-263035 A (IB Chemical CO). Isobutylidene Diurea (IBDU) alone or together with urea is dispersed in water to form a slow release fertilizer. To this solution there are added dispersing agents and gelling agents such as alginates, guar gum derivates etc. This fertilizer is restricted to containing IBDU which in itself releases the nutrient compounds rather slowly.

FR-A-2086482 relates to foliar sprays to be applied directly on the plant; the composition comprises water-in-oil emulsions wherein the discontinuous phase is an aqueous solution of various fertilizers like urea etc.

US-A-4394149 discloses encapsulated plant nutrients and which are not a true water-in-oil emulsion type product; the lipid vesicles used are significantly different from a continous phase (oil) as used in a water-in-oil emulsion type product.

US-A-3272613 discloses a composition being a combination of fertilizer and weed control agent to be applied by spraying; it is desired that the hydrocarbons shall be toxic in order to act as weed control.

WO-A-9301150 discloses a fertilizer controllably affecting composition in the form of a stable paste or an emulsion slurry, comprising 30 to 90 % by weigth of a compound containing plant nutrients, 6 to 50 % by weight of water, 2 to 20 % by weight of oil and 2 to 25 % by weight of water-in-oil type (w/o) surfactant.

The main object of the present invention was to arrive at a new type of liquid fertilizer compositions having a high nutrient value and being pumpable such that they could be spread out on the fields by means of conventional spreader equipment.

A second object was to attain a fertilizer having desired slow release properties without the disadvantages related to known slow release fertilizers.

A further object was to attain such fertilizer compositions that were not restricted to special nutrient salts only.

Subject matter of the present invention is a fertilizer composition comprising solution or dispersion of nutrient compounds according to Claim 1.

Preferred embodiments of these fertilizer composition are subject matter of Claims 2 to 9.

A further subject matter is also a method for the preparation of fertilizer compositions of the present invention according to Claim 10.

One disadvantage of known aqueous fertilizer compositions is their low content of nutrient as it is necessary to have a relatively high content of water to avoid precipitation of the nutrient salts and thereby make the solution unstable, especially during storage at low temperature.

The inventors tried to attack this problem by using surfactants and adding components which are not soluble in water. It was then surprisingly found that high concentrated aqueous solutions/dispersions of nutrient compounds could be obtained by letting this solution/dispersion constitute the discontinuous phase of a water-in-oil emulsion. Further investigations proved that the amount of the oil component could be extremely low without reducing the stability of the w-i-o emulsion. It was also found that even highly concentrated fertilizer melts with virtually no water could be emulsified into a w-i-o type emulsion. This is probably due to the fact that such melts are not soluble in the oil or hydrocarbon used for the continuous phase.

Incorporation of oil in fertilizers is generally considered negative from agronomic and environmental points of view. Incorporation of aqueous salt solutions into w-i-o emulsions is generally known in the art, especially in the explosives field. But such emulsions might contain as much as 20 weight% hydrocarbons and such large amounts of oil would be prohibitive in fertilizers for several reasons as indicated above.

In view of the fact that hydrocarbons used in w-i-o emulsions are not soluble in water, the emulsion as such should not be very soluble in water. The problem was then to obtain a stable emulsion having a minimum of oil and maximum of nutrients. Thus the emulsion should have a high phase ratio (i.e. volume of discontinuous phase/total volume) and further have a liquid phase having a high content of nutrient compounds. Experiments have shown that the phase ratio should be larger than 0.8 and might be as high as 0.95. The most perferred phase ratio was found to be 0.90-0.94. It was found that such w-i-o emulsions could be obtained and possess high stability even when the aqueous phase was strongly supersaturated. No crystallization or precipitation of nutrient compounds was registered for the new fertilizer compositions according to the invention.

The hydrocarbon phase comprises oils, waxes or mixture of these. The hydrocarbons being of mineral, vegetable or animal origin and their properties may further be modified by addition of polymers or elastomers such as polyethylene wax, polyisobutylene etc. These additives are used to modify the viscocity of the emulsion and this proved to retard the release of nutrients of the emulsion. Useful amounts of such elastomers were found to be 0.5-6 weight% of the hydrocarbon phase. The hydrocarbon phase is not required to be liquid at production temperature of the emulsion, it should, however, be liquified prior to the emulsification step.

Applicable emulsifiers are selected from those generally used for w-i-o emulsions and must be agronomically and environmentally acceptable. A typically useful type of emulsifier is sorbitane monooleate. If non-ionic emulsifiers are used, the HLB value of the emulsifier or mixtures thereof should be less than 7 (HLB: hydrophile-lipophile balance).

The solution/dispersion, i.e. the discontinuous phase of the fertilizer emulsion, may comprise a solution of one nutrient compound only or a mixture of nutrient compounds. The solution can be supersaturated and may even contain minor amounts of salts which are not soluble in water. However, too large amounts of such salts may effect negatively the storage stability of the emulsion. During the development of the invention several different aqueous nutrient solutions and melts have been emulsified and some typical examples are mentioned:
- Urea
- Ammonium nitrate
- Calcium nitrate
- Sodium nitrate
- Complex fertilizer (NPK)
- Mono- or diammonium phosphate (MAP or DAP)
- Potassium nitrate

Such solutions have been emulsified as pure systems, but also mixtures of the above mentioned types have been emulsified. Micronutrients like manganese, iron, zink etc. have also been successfully incorporated in the fertilizer emulsions.

It has further been found that to such fertilizer emulsions varying amounts of solid mineral fertilizers can be added. About 20 weight% of prilled complex fertilizer (NPK) was for instance added to one of the new fertilizer emulsions without reducing substantially the mixture's ability to release nutrient over a given period of time. Higher amounts of solid fertilizer may also be added to the emulsion fertilizer, but this might reduce the time for release of nutrients. This slightly negative effect of additional solids should be evaluated in view of the total cost of the fertilizer composition. Thus it has been found that up to 60 weight% of the total fertilizer composition comprising an emulsion may consist of solid fertilizers.

Typical fertilizer compositions according to the invention comprise:

Fertilizer compositions in which the aqueous discontinuous phase is a supersaturated solution of ammonium nitrate and where the phase ratio of the emulsion is 0.8-0.95.

Another preferred type of fertilizer composition according to the invention are those in which the discontinuous phase contains 0-25 weight% water and 100-75 weight% urea, ammonium nitrate (UAN).

Fertilizer compositions according to the invention comprising solid nutrients would preferably consist of 90-70 weight% w-i-o type emulsion and 10-30 weight% solid nutrients.

The scope of the invention is as defined in the attached claims.

The invention will now be further described and illustrated in the following examples.

In the following description there are shown various examples of manufacture and testing of fertilizer compositions according to the invention.

### Method of manufacture

All the compositions were made by applying nutrient compounds dissolved in water at a temperature of about 10°C above the crystallization temperature of the mixture. Then the aqueous solution was added to a solution of hydrocarbons and emulsifier which was heated to the same temperature, during intensive stirring by means of a turbine stirrer. Stirring speed, time of stirring and dimensions of the stirrer will depend on the size of the mixture. In the examples there was used a mixture of about 600 g. A turbine stirrer was used having a diameter of 8 cm. At start-up there was applied a speed of 600 revolutions per minute (rpm). The aqueous solution was added over a period of about 1 minute. Then the stirring speed was increased to 1200 rpm and the stirring continued for about 2 minutes.

For an industrial application a continuous emulsification process would be preferred. However, for laboratory tests batch processes are preferred to secure easy control of the various process parameters like stirring intensity etc. for obtaining desired mixing. Typical range for stirring time will be 0.3-3 minutes.

Sorbitane monooleate (Span-80 from ICI) was used as emulsifier in all the examples in an amount of about 1 weight% of the total weight of the mixture.

The results are stated as amount nitrogen lost compared to the original N-content. This is chosen because the N-content of the original examples varies.

### Example 1

This example shows the effect of modifying the hydrocarbon phase by addition of various types of elastomeres, in all the experiments the same nutrient solution (ammonium nitrate and urea) was used. The phase ratio was:
Vistalon 707 and 3708 are trade names for commercial polyisobutylene, in the following table stated as Elastomer 1 and 2, respectively.

| Mixture No. | | 1.1 | 1.2 | 1.3 | 1.4 | 1.5 |
|---|---|---|---|---|---|---|
| Mixture type | | Prills | Emulsion w/white oil | Emulsion w/white oil Vistalon 707 | Emulsion w/white oil/Vistalon 3708 | Emulsion w/wax |
| Water content | (%) | 0 | 5.0 | 5.0 | 5.0 | 5.0 |
| Ammonium nitrate | (%) | 50.0 | 45.0 | 45.0 | 45.0 | 45.0 |
| Urea | (%) | 50.0 | 45.0 | 45.0 | 45.0 | 45.0 |
| Emulsifier, Span-80 | (%) | 0 | 1.0 | 1.0 | 1.0 | 1.0 |
| White Oil | (%) | 0.0 | 4.0 | 3.9 | 3.7 | 0.0 |
| Elastomer 1 | (%) | 0.0 | 0.0 | 0.1 | 0.3 | 0.0 |
| Elastomer 2 | (%) | 0.0 | 0.0 | 0.0 | 0.0 | 4.0 |

| Results | | | | | | |
|---|---|---|---|---|---|---|
| Amount N lost after 56 days | (%) | 100 after 1 day | 50 | 42 | 35 | 45 |

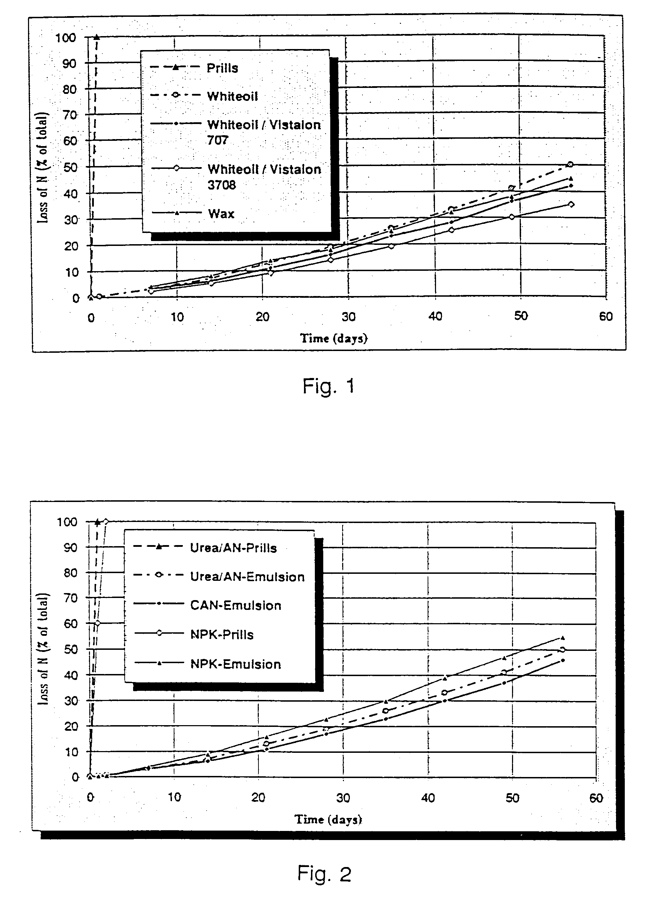

The results are shown in Fig. 1. It can be seen that application of emulsions gives a dramatic reduction of release of nitrogen from the mixture. It is further seen that the rate of release can be altered by modifying the composition of the hydrocarbon phase. Addition of elastomere to the oil phase reduced the release of nitrogen from the emulsion compared to the release from emulsions which contain oil only. The same result can be obtained by applying wax, but this is usually a more costly hydrocarbon.

### Example 2

In this example the effect of altering the composition of the salt solution is shown. The phase ratio during these experiments was:

| Mixture No. | | 2.1 | 2.2 | 2.3 | 2.4 | 2.5 |
|---|---|---|---|---|---|---|
| Type | | Urea/AN Prills | Urea/AN Emulsion | CAN Emulsion | NPK Prills | NPK Emulsion |
| N-content | (%) | 40.7 | 36.7 | 23.4 | 20.0 | 15.0 |
| Urea | (%) | 50.0 | 45.0 | 0.0 | 0.0 | 0.0 |
| Ammonium nitrate | (%) | 50.0 | 45.0 | 45.0 | 0.0 | 0.0 |
| Calcium nitrate | (%) | 0.0 | 0.0 | 45.0 | 0.0 | 0.0 |
| NPK 20-6-12 | (%) | 0.0 | 0.0 | 0.0 | 100.0 | 75.0 |
| Water | (%) | 0.0 | 5.0 | 5.0 | 0.0 | 20.0 |
| White oil | (%) | 0.0 | 4.0 | 4.0 | 0.0 | 4.0 |
| Span-80 | (%) | 0.0 | 1.0 | 1.0 | 0.0 | 1.0 |

| Result: | | | | | | |
|---|---|---|---|---|---|---|
| Amount N lost (% of orig.) after 56 days | (%) | 100 after 1 day | 50 | 46 | 100 after 2 days | 55 |

The complete results of this example are shown in Fig. 2. As can be seen from this figure, all the emulsions were tested for 56 days and they had lost about 50% of the original nitrogen content. The NPK emulsion gives the highest loss and the reason for this is probably that this one due to the high content of micronutrients is the least stable emulsion. However, it can be seen that even this emulsion gives a dramatic reduction of the nitrogen loss compared to prilled products.

### Example 3

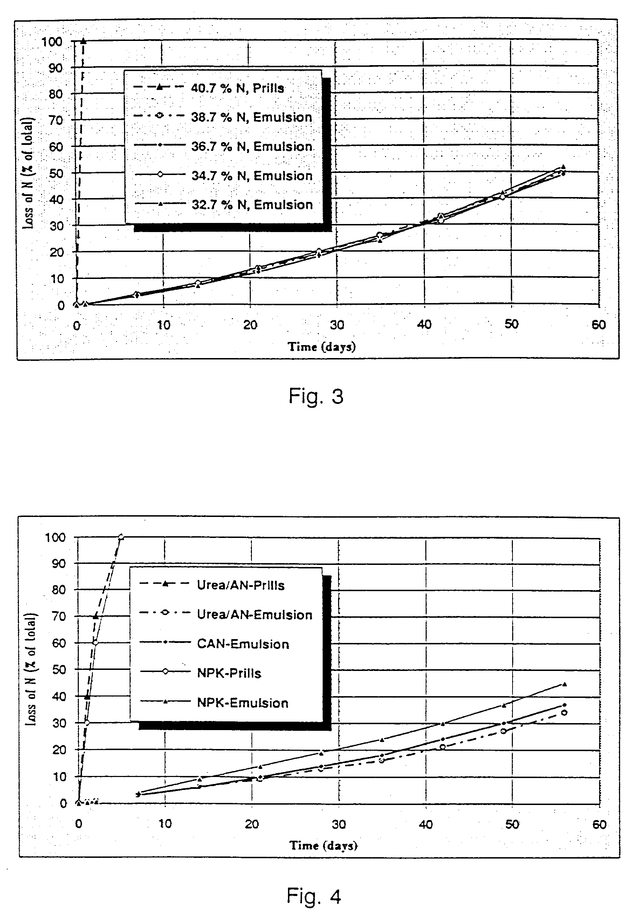

In this example is shown the effect of altering the nitrogen concentration of the salt solution. The emulsions are made and tested according to the previous description. The phase ratio was:
The results are shown in Fig. 3.

| Mixture No. | | 3.1 | 3.2 | 3.3 | 3.4 | 3.5 |
|---|---|---|---|---|---|---|
| Type | | Prills | Emulsion | Emulsion | Emulsion | Emulsion |
| N-content | (%) | 40.7 | 38.7 | 36.4 | 34.0 | 32.7 |
| Urea | (%) | 50.0 | 47.5 | 45.0 | 42.5 | 40.0 |
| Ammonium nitrate | (%) | 50.0 | 47.5 | 45.0 | 42.5 | 15.0 |
| Water | (%) | 0.0 | 0.0 | 5.0 | 10.0 | 15.0 |
| White oil | (%) | 0.0 | 4.0 | 4.0 | 4.0 | 4.0 |
| Span-80 | (%) | 0.0 | 1.0 | 1.0 | 1.0 | 1.0 |
| Remarks: | | Mixture of AN and urea prills | | | | |

| Result: | | | | | | |
|---|---|---|---|---|---|---|
| Amount N lost (% of orig.) after 56 days | (%) | 100 after 1 day | 50 | 49 | 51 | 52 |

As can be seen the loss of nitrogen in percent is about the same and independent of the nitrogen concentration of the salt solution. Probably this is due to the fact that the release of nitrogen is caused by exposure of the salt droplets corresponding with the rate of degradation of the oil film by soil bachteria. Thus there is only minimal diffusion of nitrogen through the oil film.

Accordingly, it is possible to control the amount (in kg) of nitrogen released per unit of time by adjusting the original salt concentration.

### Example 4

In this example the samples (100 g of each) from Example 2 were placed in bottles containing 2 l of soil. The bottles were closed by wire cloth. The original bottoms of the bottles were removed and 1.5 l soil were filled in the bottles. Then 100 g of the sample were added before the remaining 0.5 l of soil was added. 200 ml of purified water were each week added to the samples. This water ran through the sample and was collected in beakers and thereupon analyzed in the conventional way. Further, it was carried out tests in a soil sample without added fertilizer (reference). The values of loss of nitrogen from the samples were corrected against the value for release of nitrogen from the reference sample (pure soil).

| Mixture No | | 4.0 | 4.1 | 4.2 | 4.3 | 4.4 | 4.5 |
|---|---|---|---|---|---|---|---|
| Type | | Soil test | Urea/AN Prills | Urea/AN Emul. | CAN Emul. | NPK Prills | NPK Emul. |

| Comp., fertilizer | | | | | | | |
|---|---|---|---|---|---|---|---|
| N-content | (%) | 0.0 | 40.7 | 36.7 | - | - | |
| Urea | (%) | 0.0 | 50.0 | 45.0 | - | - | |
| Ammonium nitrate | (%) | 0.0 | 50.0 | 45.0 | 45.0 | | |
| Calcium nitrate | (%) | 0.0 | 0.0 | 0.0 | 45.0 | | |
| Water | (%) | 0.0 | 0.0 | 5.0 | 5.0 | 0.0 | 20.0 |
| White oil | (%) | 0.0 | 0.0 | 4.0 | 4.0 | 0.0 | 4.0 |
| Span-80 | (%) | 0.0 | 0.0 | 1.0 | 1.0 | 0.0 | 1.0 |

| Result: | | | | | | | |
|---|---|---|---|---|---|---|---|
| Amount N (of added fertilizer) after 56 days (corrected against N-loss from the soil test) | (%) | 1.2 g as N from soil test | 100 after 1 day | 34 | 37 | 100 after 2 days | 45 |

In Fig. 4 it is shown that the release of nitrogen is the same as shown in Example 2 (Fig. 2). All the samples according to the invention show dramatic reduction in release of nitrogen compared to traditional types of fertilizer. However, it can also be seen that the release of nitrogen takes place in a somewhat different way as the total loss is slower, but the curves show an increase as function of time. The reason for this is possibly that after some time bacteria are formed which consume oil and thereby break down the emulsion faster than can be seen from the samples tested in water. This is confirmed by one test where the mixtures Nos. 2.2 and 4.2 were investigated over a longer period than 64 days. It was then found that 100% of the nitrogen was washed out after 106 days from the mixture which was tested in water (like 2.2), while 100% nitrogen was washed out after 89 days from the mixture which was tested in soil (4.2).

As can be seen from the examples and the figures, the inventors have succeeded in manufacturing new fertilizer compositions which are liquid and pumpable and can be applied on the fields by spreader equipment or injected into the soil, in spite of the fact that the new fertilizer compositions contain far less water than conventional liquid fertilizer. Said new w-i-o type emulsion may even be made directly from fertilizer melts and will accordingly hardly contain any water.

A number of fertilizer formulations can be made within this new emulsion concept. Thus even solid fertilizer can be mixed with the emulsion fertilizer and still have pumpable properties.

The new fertilizer compositions possess excellent slow release properties and contain far less hydrocarbons than conventional coated solid fertilizers of the slow release type.

## Claims (Claims for the following Contracting State(s): AT, BE, CH, LI, DE, FR, GB, IT, NL, PT, SE)

1. Fertilizer composition comprising solution or dispersion of nutrient compounds, the solution/dispersion constituting the discontinuous phase of a water-in-oil type (w-i-o) emulsion and the oil of hydrocarbon component of the w-i-o emulsion comprises mineral, vegetable or animal oils, wax or mixture of these, and the emulsion comprises at least one w-i-o emulsifier, characterized in that the volume phase ratio, discontinuous phase : total volume is in the range of 0.80-0.95, and that the fertilizer composition additionally may contain 0-60 weight % solid nutrient salts and/or urea.

2. Fertilizer composition according to Claim 1, characterized in that the volume phase ratio is in the range 0.9-0.94.

3. Fertilizer composition according to Claim 1, characterized in that the hydrocarbon component contains 0.5-6 weight % of elastomeres, preferably polyisobutylene.

4. Fertilizer composition according to Claim 1, characterized in that the aqueous discontinuous phase is a supersaturated solution of ammonium nitrate and in that the phase ratio of the emulsion is 0.80-0.95.

5. Fertilizer composition according to Claim 1, characterized in that the discontinuous phase contains 0-25 weight % water and 100-25 weight % urea-, ammonium nitrate (UAN).

6. Fertilizer composition according to Claim 1, characterized in that the discontinuous phase is a solution of 0-5 % water and 95-100 % UAN and the continuous phase comprises about 4 weight % of the total composition which also contains about 1 weight % emulsifier.

7. Fertilizer composition according to Claim 1, characterized in that the aqueous discontinuous phase comprises complex fertilizer (NPK) possibly containing micronutrients.

8. Fertilizer composition according to Claim 1, characterized in that the hydrocarbon of the continuous phase is white oil and the emulsifier is sorbitane monooleate.

9. Fertilizer composition according to Claim 1, characterized in that the fertilizer composition consists of 90-70 weight % emulsion and 10-30 weight % solid nutrients.

10. Method for the preparation of a fertilizer composition according to any of Claims 1 to 9, characterized in that the nutrient compounds are dissolved or dispersed at a temperature of 5-15 °C above the crystallization temperature of the mixture to constitute the discontinuous phase, and then added while stirring to a mixture of emulsifier and hydrocarbon which may contain 0.5-6 weight % elastomere, said mixture having been heated to about the same temperature as the former mixture and in that the combined mixtures are exposed to intensified stirring for 0.3-3 minutes.

## Claims (Claims for the following Contracting State(s): ES, GR)

1. Method for the preparation of a fertilizer composition comprising solution or dispersion of nutrient compounds, the solution/dispersion constituting the discontinuous phase of a water-in-oil type (w-i-o) emulsion and the oil of hydrocarbon component of the w-i-o emulsion comprises mineral, vegetable or animal oils, wax or mixture of these, and the emulsion comprises at least one w-i-o emulsifier, characterized in that the volume phase ratio, discontinuous phase : total volume is held in the range of 0.80-0.95, and that to the fertilizer composition there may additionally be added 0-60 weight % solid nutrient salts and/or urea.

2. Method according to Claim 1,
characterized in that the volume phase ratio is held in the range 0.9-0.94.

3. Method according to Claim 1,
characterized in that a hydrocarbon component is used that contains 0.5-6 weight % of elastomeres, preferably polyisobutylene.

4. Method according to Claim 1,
characterized in that the aqueous discontinuous phase used is a supersaturated solution of ammonium nitrate and in that the phase ratio of the emulsion used is 0.80-0.95.

5. Method according to Claim 1,
characterized in that a discontinuous phase is used that contains 0-25 weight % water and 100-25 weight % urea-, ammonium nitrate (UAN).

6. Method according to Claim 1,
characterized in that the discontinuous phase used is a solution of 0-5 % water and 95-100 % UAN and the continuous phase used comprises about 4 weight % of the total composition which also contains about 1 weight % emulsifier.

7. Method according to Claim 1,
characterized in that the aqueous discontinuous phase used comprises complex fertilizer (NPK) possibly containing micronutrients.

8. Method according to Claim 1,
characterized in that the hydrocarbon used in the continuous phase is white oil and the emulsifier is sorbitane monooleate.

9. Method according to Claim 1,
characterized in that for the fertilizer composition 90-70 weight % emulsion and 10-30 weight % solid nutrients are used.

10. Method according to Claims 1 to 9,
characterized in that the nutrient compounds are dissolved or dispersed at a temperature of 5-15 °C above the crystallization temperature of the mixture to constitute the discontinuous phase, and then added while stirring to a mixture of emulsifier and hydrocarbon which may contain 0.5-6 weight % elastomere, said mixture having been heated to about the same temperature as the former mixture and in that the combined mixtures are exposed to intensified stirring for 0.3-3 minutes.

## Patentansprüche (Patentansprüche für folgende(n) Vertragsstaat(en): AT, BE, CH, LI, DE, FR, GB, IT, NL, PT, SE)

1. Düngemittelzusammensetzung, umfassend eine Lösung oder Dispersion von Nährstoffverbindungen, wobei die Lösung/Dispersion die diskontinuierliche Phase einer Emulsion des Wasser-in-Öl-Typs (w-i-o-Emulsion) bildet und das Öl der Kohlenwasserstoffkomponente der w-i-o-Emulsion Mineral-, Pflanzen- oder Tieröle, Wachs oder Gemische von diesen umfaßt, und worin die Emulsion mindestens ein w-i-o-Emulgator umfaßt, dadurch gekennzeichnet, daß das Volumen-Phasen-Verhältnis diskontinuierliche Phase : Gesamtvolumen im Bereich von 0,80-0,95 ist und, daß die Düngemittelzusammensetzung zusätzlich 0-60 Gew.-% feste Nährstoffsalze und/oder Harnstoff enthalten kann.

2. Düngemittelzusammensetzung nach Anspruch 1, dadurch gekennzeichnet, daß das Volumen-Phase-Verhältnis im Bereich von 0,9 bis 0,94 ist.

3. Düngemittelzusammensetzung nach Anspruch 1, dadurch gekennzeichnet, daß die Kohlenwasserstoffkomponente 0,5-6 Gew.-% Elastomere, vorzugsweise Polyisobutylen, umfaßt.

4. Düngemittelzusammensetzung nach Anspruch 1, dadurch gekennzeichnet, daß die wäßrige diskontinuierliche Phase eine übersättigte Lösung von Ammoniumnitrat ist, und dadurch, daß das Phasenverhältnis der Emulsion 0,80-0,95 ist.

5. Düngemittelzusammensetzung nach Anspruch 1, dadurch gekennzeichnet, daß die diskontinuierliche Phase 0-25 Gew.-% Wasser und 100-25 Gew.-% Harnstoff, Ammoniumnitrat (UAN) enthält.

6. Düngemittelzusammensetzung nach Anspruch 1, dadurch gekennzeichnet, daß die diskontinuierliche Phase eine Lösung von 0-5 % Wasser und 95-100 % UAN ist und die kontinuierliche Phase etwa 4 Gew.-% der Gesamtzusammensetzung umfaßt, welche auch etwa 1 Gew.-% Emulgator umfaßt.

7. Düngemittelzusammensetzung nach Anspruch 1, dadurch gekennzeichnet, daß die wäßrige diskontinuierliche Phase Komplexdüngemittel (NPK), enthält, das gegebenenfalls Spurennährstoffe umfaßt.

8. Düngemittelzusammensetzung nach Anspruch 1, dadurch gekennzeichnet, daß der Kohlenwasserstoff der kontinuierlichen Phase Weißöl ist und der Emulgator Sorbitanmonoolleat ist.

9. Düngemittelzusammensetzung nach Anspruch 1, dadurch gekennzeichnet, daß die Düngemittelzusammensetzung aus 90-70 Gew.-% Emulsion und 10-30 Gew.-% festen Nährstoffen besteht.

10. Verfahren zur Herstellung einer Düngemittelzusammensetzung nach einem der Ansprüche 1 bis 9, dadurch gekennzeichnet, daß die Nährstoffverbindungen bei einer Temperatur von 5-15 °C über der Kristallisationstemperatur des Gemisches gelöst oder dispergiert werden, um die diskontinuierliche Phase zu bilden, und dann unter Rühren zu einem Gemisch von Emulgator und Kohlenwasserstoff gegeben werden, welches 0,5-6 Gew.-% Elastomer enthalten kann, wobei das Gemisch auf etwa die gleiche Temperatur wie das vorherige Gemisch erhitzt wurde, und dadurch, daß die vereinigten Gemische einem verstärkten Rühren für 0,3 bis 3 Minuten ausgesetzt werden.

## Patentansprüche (Patentansprüche für folgende(n) Vertragsstaat(en): ES, GR)

1. Verfahren zur Herstellung einer Düngemittelzusammensetzung, umfassend eine Lösung oder Dispersion von Nährstoffverbindungen, wobei die Lösung/Dispersion die diskontinuierliche Phase einer Emulsion des Wasser-in-Öl-Typs (w-i-o-Emulsion) bildet und das Öl der Kohlenwasserstoffkomponente der w-i-o-Emulsion Mineral-, Pflanzen- oder Tieröle, Wachs oder Gemische von diesen umfaßt, und worin die Emulsion mindestens ein w-i-o-Emulgator umfaßt, dadurch gekennzeichnet, daß das Volumen-Phasen-Verhältnis diskontinuierliche Phase : Gesamtvolumen im Bereich von 0,80-0,95 gehalten wird und, daß zu der Düngemittelzusammensetzung zusätzlich 0-60 Gew.-% feste Nährstoffsalze und/oder Harnstoff gegeben werden können.

2. Verfahren nach Anspruch 1, dadurch gekennzeichnet, daß das Volumen-Phase-Verhältnis im Bereich von 0,9 bis 0,94 gehalten wird.

3. Verfahren nach Anspruch 1, dadurch gekennzeichnet, daß eine Kohlenwasserstoffkomponente 0,5-6 Gew.-% Elastomere, vorzugsweise Polyisobutylen, umfaßt.

4. Verfahren nach Anspruch 1, dadurch gekennzeichnet, daß die verwendete wäßrige diskontinuierliche Phase eine übersättigte Lösung von Ammoniumnitrat ist und dadurch, daß das Phasenverhältnis der verwendeten Emulsion 0,80-0,95 ist.

5. Verfahren nach Anspruch 1, dadurch gekennzeichnet, daß eine diskontinuierliche Phase verwendet wird, die 0-25 Gew.-% Wasser und 100 - 25 Gew.-% Harnstoff, Ammoniumnitrat (UAN) enthält.

6. Verfahren nach Anspruch 1, dadurch gekennzeichnet, daß die verwendete diskontinuierliche Phase eine Lösung von 0-5 % Wasser und 95-100 % UAN ist und die verwendete kontinuierliche Phase etwa 4 Gew.-% der Gesamtzusammensetzung umfaßt, welche auch etwa 1 Gew.-% Emulgator umfaßt.

7. Verfahren nach Anspruch 1, dadurch gekennzeichnet, daß die verwendete wäßrige diskontinuierliche Phase Komplexdüngemittel (NPK) enthält, das gegebenenfalls Spurennährstoffe umfaßt.

8. Verfahren nach Anspruch 1, dadurch gekennzeichnet, daß der in der kontinuierlichen Phase verwendete Kohlenwasserstoff Weißöl ist und der Emulgator Sorbitanmonoolleat ist.

9. Verfahren nach Anspruch 1, dadurch gekennzeichnet, daß für die Düngemittelzusammensetzung 90-70 Gew.-% Emulsion und 10-30 Gew.-% feste Nährstoffe verwendet werden.

10. Verfahren nach den Ansprüchen 1 bis 9, dadurch gekennzeichnet, daß die Nährstoffverbindungen bei einer Temperatur von 5-15 °C über der Kristallisationstemperatur des Gemisches gelöst oder dispergiert werden, um die diskontinuierliche Phase zu bilden, und dann unter Rühren zu einem Gemisch von Emulgator und Kohlenwasserstoff gegeben werden, welches 0,5-6 Gew.-% Elastomer enthalten kann, wobei das Gemisch auf etwa die gleiche Temperatur wie das vorherige Gemisch erhitzt wurde, und dadurch, daß die kombinierten Gemische einem verstärkten Rühren für 0,3 bis 3 Minuten ausgesetzt werden.

## Revendications (Revendications pour l'(les) Etat(s) contractant(s) suivant(s): AT, BE, CH, LI, DE, FR, GB, IT, NL, PT, SE)

1. Composition d'engrais comprenant une solution ou une dispersion de composés nutritifs ou de nutriments, la solution/dispersion constituant la phase discontinue d'une émulsion de type eau-dans-huile, et l'huile du constituant hydrocarboné de l'émulsion du type eau-dans-huile comprenant des huiles minérales, végétales ou animales, de la cire ou un mélange de ces matières, et l'émulsion comprenant au moins un émulsifiant pour le produit de type eau-dans-huile, composition caractérisée en ce que le rapport entre les volumes des phases, phase discontinue: volume total, se situe entre 0,80 et 0,95, et en ce que la composition d'engrais peut en outre contenir 0 à 60% en poids de sels nutritifs solides et/ou d'urée.

2. Composition d'engrais selon la revendication 1, caractérisée en ce que le rapport entre les volumes des phases se situe entre 0,9 et 0,94.

3. Composition d'engrais selon la revendication 1, caractérisée en ce que le constituant hydrocarboné contient 0,5 à 6% en poids d'élastomères, de préférence du polyisobutylène.

4. Composition d'engrais selon la revendication 1, caractérisée en ce que la phase aqueuse discontinue est une solution sursaturée de nitrate d'ammonium et en ce que le rapport entre les phases de l'émulsion vaut de 0,80 à 0,95.

5. Composition d'engrais selon la revendication 1, caractérisée en ce que la phase discontinue contient 0 à 25% en poids d'eau et 100 à 25% en poids d'urée et de nitrate d'ammonium (UNA).

6. Composition d'engrais selon la revendication 1, caractérisée en ce que la phase discontinue est une solution de 0-5 % d'eau et de 95-100 % d'UNA, et en ce que la phase continue représente environ 4 % de la composition totale, laquelle contient également environ 1 % en poids d'émulsifiant.

7. Composition d'engrais selon la revendication 1, caractérisée en ce que la phase aqueuse discontinue comprend de l'engrais complexe (NPK) contenant éventuellement des micronutriments ou oligo-éléments.

8. Composition d'engrais selon la revendication 1, caractérisée en ce que l'hydrocarbure de la phase continue est de l'huile blanche, et l'émulsifiant est du monooléate de sorbitane.

9. Composition d'engrais selon la revendication 1, caractérisée en ce que la composition d'engrais consiste en 90 à 70% en poids de l'émulsion et en 10 à 30% en poids de nutriments solides.

10. Procédé pour la préparation d'une composition d'engrais selon l'une quelconque des revendications 1 à 9, procédé caractérisé en ce que les composés nutritifs sont dissous ou dispersés, à une température supérieure de 5 à 15°C à la température de cristallisation du mélange, pour constituer la phase discontinue, puis ils sont ajoutés sous agitation à un mélange de l'émulsifiant et de l'hydrocarbure, qui peut contenir 0,5 à 6% en poids d'élastomère, ledit mélange étant chauffé jusqu'au voisinage de la même température que le premier mélange, et en ce que les mélanges combinés sont exposés à une agitation intensifiée durant 0,3 à 3 minutes

## Revendications (Revendications pour l'(les) Etat(s) contractant(s) suivant(s): ES, GR)

1. Procédé pour la préparation d'une composition d'engrais comprenant une solution ou dispersion de composés nutritifs, la solution/dispersion constituant la phase discontinue d'une émulsion du type eau-dans-huile, et l'huile du constituant hydrocarboné de l'émulsion du type eau-dans-huile comprenant des huiles minérales, végétales ou animales, de la cire ou des mélanges de telles matières, et l'émulsion comprenant au moins un émulsifiant pour l'obtention d'un produit du type eau-dans-huile, procédé caractérisé en ce que le rapport entre les volumes des phases, phase discontinue: volume total, est maintenu dans l'intervalle compris entre 0,80 et 0,95, et en ce qu'à la composition d'engrais on peut ajouter en outre 0 à 60% en poids de sels nutritifs solides et/ou d'urée.

2. Procédé selon la revendication 1, caractérisé en ce que le rapport entre les volumes des phases est maintenu dans l'intervalle de 0,9 à 0,94.

3. Procédé selon la revendication 1, caractérisé en ce qu'on utilise un constituant hydrocarboné qui contient 0,5 à 6% en poids d'élastomères, de préférence du polyisobutylène.

4. Procédé selon la revendication 1, caractérisé en ce que la phase aqueuse discontinue que l'on utilise est une solution sursaturée de nitrate d'ammonium et en ce que le rapport entre les phases que l'on utilise pour l'émulsion vaut de 0,80 à 0,95.

5. Procédé selon la revendication 1, caractérisé en ce qu'on utilise une phase discontinue qui contient 0 à 25% en poids d'eau et 100 à 25% en poids d'urée et de nitrate d'ammonium (UNA).

6. Procédé selon la revendication 1, caractérisé en ce que la phase discontinue que l'on utilise est une solution comportant 0 à 5% en poids d'eau et 95 à 100% de UNA et en ce que la phase continue que l'on utilise représente environ 4% du poids de la composition totale et contient également environ 1% en poids d'émulsifiant.

7. Procédé selon la revendication 1, caractérisé en ce que la phase aqueuse discontinue que l'on utilise comprend de l'engrais complexe de type NPK, contenant éventuellement des micronutriments ou des oligo-éléments.

8. Procédé selon la revendication 1, caractérisé en ce que l'hydrocarbure que l'on utilise dans la phase continue est de l'huile blanche, et l'émulsifiant est du monooléate de sorbitane.

9. Procédé selon la revendication 1, caractérisé en ce que l'on utilise pour la composition d'engrais 90 à 70% en poids de l'émulsion et 10 à 30% en poids de matières nutritives solides ou de nutriments solides.

10. Procédé selon les revendications 1 à 9, caractérisé en ce que les composés nutritifs sont dissous ou dispersés, à une température supérieure de 5 à 15°C à la température de cristallisation du mélange, pour constituer la phase discontinue, puis on les ajoute, sous agitation, à un mélange de l'émulsifiant et de l'hydrocarbure, qui peut contenir 0,5 à 6% en poids d'élastomère, ledit mélange ayant été chauffé jusqu'au voisinage de la même température que le premier mélange, et en ce que les mélanges combinés sont exposés à une agitation intensifiée durant 0,3 à 3 minutes.
